# FASCICULE DE BREVET EUROPEEN

(11) **EP 0 626 296 B1**
(45) Date de publication et mention de la délivrance du brevet: **18.09.1996**
(21) Numéro de dépôt: 94400898.6
(22) Date de dépôt: 26.04.1994
(51) Int. Cl.: B60S 1/52, B60Q 1/30

(54) **Feu de signalisation supplémentaire pour véhicule automobile**
Zusatzwarnleuchte für Fahrzeuge
Supplementary warning lights for vehicle

(30) Priorité: 19.05.1993 FR 9306065
(43) Date de publication de la demande: 30.11.1994
(73) Titulaire: AUTOMOBILES PEUGEOT, 75116 Paris (FR); AUTOMOBILES CITROEN, 92200 Neuilly sur Seine (FR)
(72) Inventeur: Robert, Christian, F-78510 Triel sur Seine (FR)
(74) Mandataire: Polus, Camille

(56) Documents cités:
- EP-A- 0 508 853
- DE-A- 2 926 305

## Description

La présente invention concerne un feu de signalisation supplémentaire pour véhicule automobile.

Dans un souci de sécurité, il est souhaitable d'équiper les véhicules automobiles de feux de signalisation supplémentaires qui sont placés à un niveau plus élevé que les feux habituels disposés sur la carrosserie. Ces feux, qui peuvent par exemple être des feux indicateurs de freinage, sont en effet mieux visibles, notamment lors d'une circulation en file relativement serrée.

Il est avantageux de placer des feux indicateurs de freinage supplémentaires à l'intérieur du véhicule, juste derrière la lunette arrière ou à proximité immédiate de celle-ci. Ces feux supplémentaires sont ainsi suffisamment écartés des autres feux de signalisation et sont parfaitement visibles. De façon classique, ces feux supplémentaires sont agencés à proximité d'autres dispositifs comportant également des moyens d'alimentation électriques, par exemple un dispositif d'essuyage de vitre ou/et un dispositif de lavage de vitre, ce qui permet de simplifier le câblage de l'ensemble de ces éléments.

Cependant, cet agencement présente l'inconvénient de juxtaposer dans un même emplacement du véhicule plusieurs éléments disparates, ce qui esthétiquement n'est pas satisfaisant et multiplie les opérations de montage.

L'invention a pour but de remédier à ces inconvénients et de proposer un feu de signalisation permettant notamment de simplifier les montages de ce feu et d'un dispositif de lavage de vitre disposé à proximité de ce feu.

A cet effet, l'invention a pour objet un feu de signalisation pour véhicule automobile comprenant une vitre et un dispositif de lavage de cette vitre muni d'un gicleur alimenté en liquide de lavage, le feu de signalisation comprenant une paroi translucide et étant destiné à être agencé à proximité de la vitre, caractérisé en ce que le gicleur comporte une buse de projection de liquide de lavage disposée dans un logement ménagé dans la paroi translucide du feu.

Suivant d'autres caractéristiques de cette invention :
- le feu de signalisation comporte un boîtier délimité en partie par la paroi translucide, et la buse est reliée à un circuit de liquide de lavage par un canal de raccordement venu de matière avec une paroi du boîtier opposée à la paroi translucide ;
- le boîtier comporte un corps assemblé avec la paroi translucide, le canal étant solidaire de ce corps et la buse étant maintenue dans le logement de la paroi translucide par serrage entre le bord de ce logement et une extrémité du canal raccordée à la buse ;
- le canal a pour plan de symétrie longitudinal un plan médian du feu de manière à s'étendre entre deux moitiés de ce feu comportant chacune un nombre égal de sources lumineuses ;
- le corps et la paroi translucide du boîtier comprennent des bords jointifs soudés entre eux délimitant un compartiment médian du boîtier dans lequel s'étend le canal, et deux compartiments latéraux dans lequel sont disposées les sources lumineuses ;
- une rangée de diodes électroluminescentes est disposée dans chacune desdites moitiés du feu, ces rangées étant disposées symétriquement par rapport au plan médian séparant lesdites moitiés du feu ;
- les diodes électroluminescentes de chaque rangée sont espacées entre elles suivant un pas constant, l'espacement entre les deux diodes électroluminescentes les plus rapprochées de ces deux rangées étant sensiblement égal au double du pas des rangées ;
- la paroi translucide est sensiblement perpendiculaire à la vitre vers laquelle est orienté le gicleur.

L'invention va être décrite plus en détail ci-dessous en se référant aux dessins annexés, donnés uniquement à titre d'exemple et sur lesquels :
- la figure 1 est une vue partielle en perspective de l'arrière d'un véhicule équipé d'un feu de signalisation supplémentaire selon l'invention ;
- la figure 2 est une vue en coupe, à grande échelle, selon la ligne 2-2 de la figure 1 ;
- la figure 3 est une vue en coupe suivant la ligne 3-3 de la figure 2 ;
- la figure 4 est une vue en coupe suivant la ligne 4-4 de la figure 2.

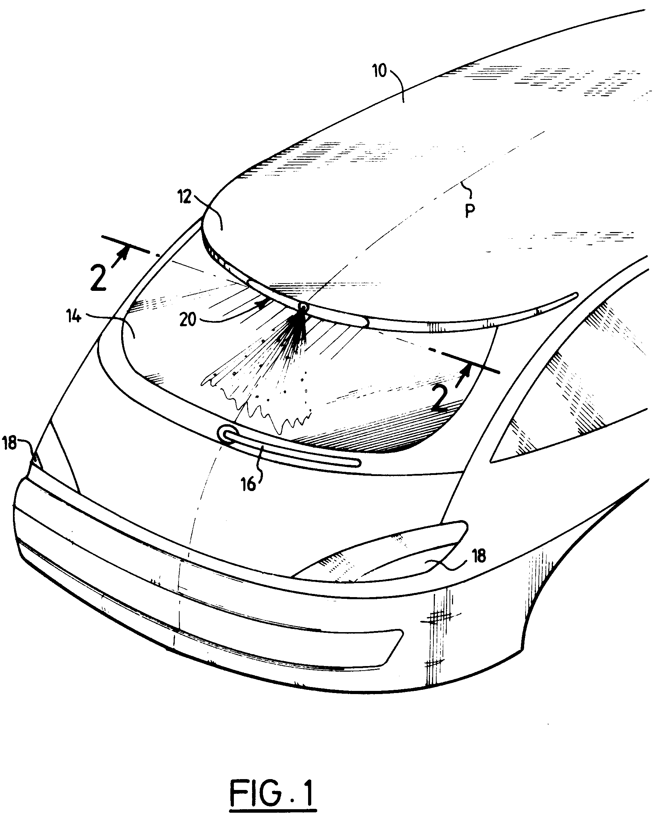

On a représenté sur la figure 1 la partie arrière d'un véhicule comportant notamment un pavillon 10, un déflecteur 12 prolongeant ce pavillon 10 vers l'arrière du véhicule, une vitre 14 de lunette arrière, un balai 16 d'essuie-glace associé à cette vitre 14 et des feux de signalisation classiques 18 agencés de façon connue en soi dans la carrosserie de véhicule.

Le véhicule comporte de plus un feu de signalisation supplémentaire 20 agencé dans le déflecteur 12.

Dans l'exemple représenté sur les dessins, le feu de signalisation supplémentaire 20 constitue un feu indicateur de freinage commandé par un dispositif connu en soi actionné par la pédale de frein du véhicule.

De préférence, le feu de signalisation 20 a comme plan de symétrie le plan longitudinal vertical médian P du véhicule.

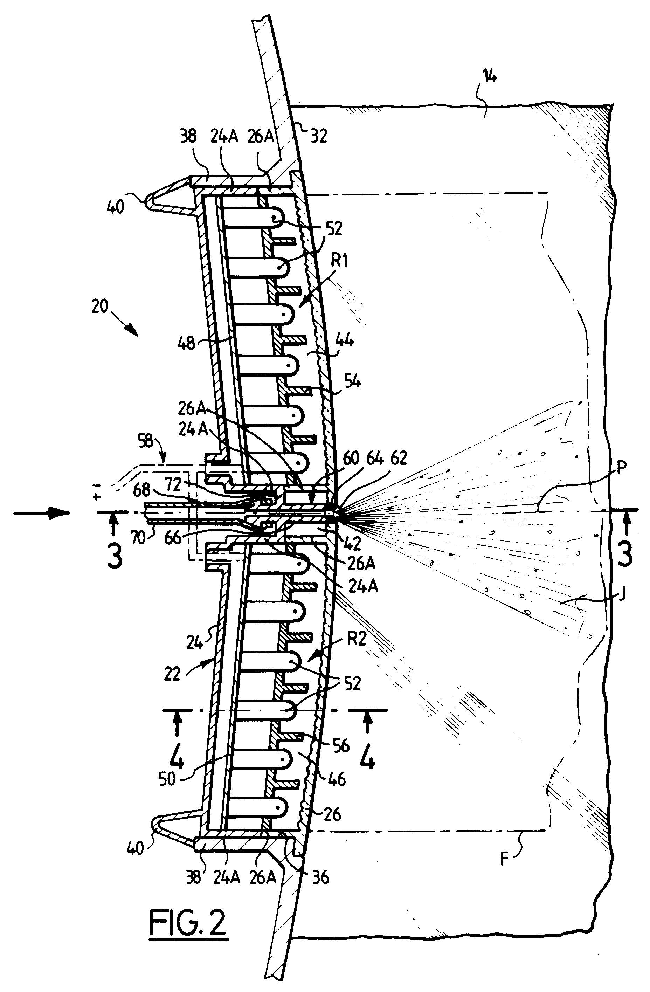

En se référant aux figures 2 à 4, sur lesquelles le feu de signalisation 20 est représenté plus en détail, on voit que ce dernier comporte un boîtier 22 comprenant un corps 24 assemblé avec une paroi translucide 26.

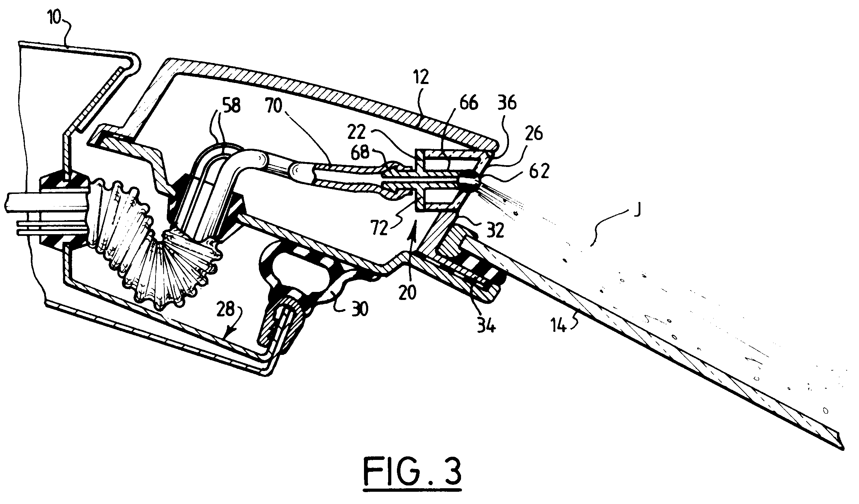

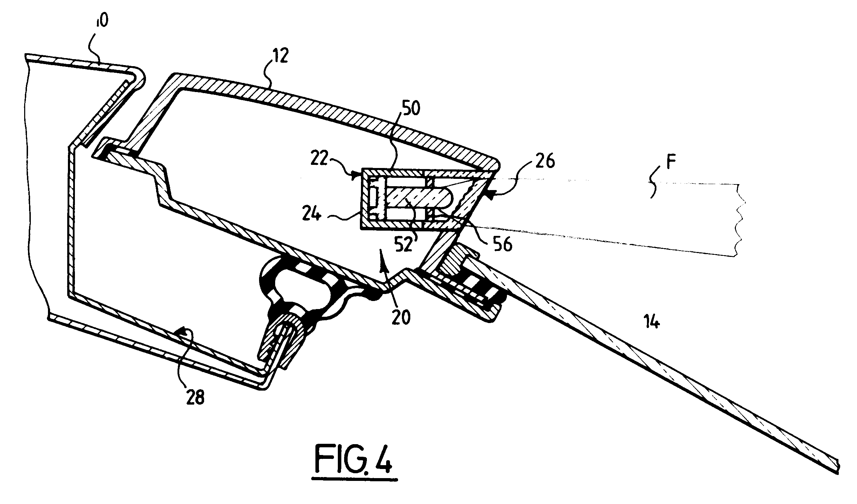

En se référant plus particulièrement aux figures 3 et 4, on voit que le déflecteur 12 a une forme générale en caisson et est agencé de façon connue en soi dans un décrochement 28 du pavillon 10.

Sur ces figures, on a également représenté un joint d'étanchéité 30 interposé entre le déflecteur 12 et le bord du décrochement 28 opposé au pavillon 10.

Le déflecteur 12 comporte une paroi 32 s'étendant le long du bord supérieur de la vitre 14, prolongée par un rebord 34 formant feuillure sur laquelle est fixé par des moyens connus, par exemple par collage, le bord supérieur de la vitre 14.

La paroi 32 est sensiblement perpendiculaire à la vitre 14 et comporte une ouverture 36 de forme générale rectangulaire et allongée parallèlement au bord supérieur de la vitre 14, formant logement pour le boîtier 22 du feu de signalisation.

En se référant à nouveau à la figure 2, on voit que le boîtier 22 est fixé dans l'ouverture 36 par encliquetage de ce boîtier sur des pattes 38 prolongeant les bords latéraux de cette ouverture 36 avec des moyens 40 déformables élastiquement de type connu.

La paroi translucide 26 du feu de signalisation obture l'ouverture 36 en s'intégrant dans la forme générale de la paroi 32 du déflecteur. On comprend donc que la paroi translucide 26 est sensiblement perpendiculaire à la vitre 14 du véhicule.

Le corps 24 et la paroi translucide 26 du boîtier, fabriqués de préférence en plastique, comportent respectivement des bords jointifs 24A,26A soudés entre eux de manière à délimiter à l'intérieur du boîtier 22 un compartiment médian 42 intercalé entre deux compartiments latéraux 44,46.

Chaque compartiment latéral 44,46 comprend une plaque de circuit imprimé 48,50 portant chacune une rangée R1,R2 de diodes électroluminescentes 52 parallèle au bord supérieur de la vitre 14.

Les rangées R1,R2 comportent chacune un nombre égal de diodes électroluminescentes et sont disposées symétriquement par rapport au plan P. Les diodes électroluminescentes 52 de chaque rangée R1,R2 sont espacées entre elles suivant un pas constant, l'espacement entre les deux diodes électroluminescentes les plus rapprochées de ces deux rangées étant sensiblement égal aux double du pas des rangées.

L'agencement des diodes électroluminescentes 52 sur les plaques de circuit imprimé 48,50 est connu en soi et ne sera pas décrit plus en détail.

On a également représenté sur la figure 2 des logements 54,56 agencés dans chaque compartiment latéral 44,46 et dans chacun desquels débouche l'élément optique d'une diode 52.

De façon classique, les rangées R1,R2 de diodes électroluminescentes sont reliées par des conducteurs 58 à un dispositif d'alimentation électrique et au dispositif de commande du feu de signalisation 20.

Sur les figures 2 et 4 on a représenté le faisceau lumineux F émis par les diodes 52 en traits mixtes.

En se référant aux figures 2 et 3, on voit que le feu de signalisation 20 comporte de plus un gicleur 60 d'un dispositif de lavage de la vitre 14, intégré dans la paroi translucide 26 du boîtier 22.

Le gicleur 60 comporte une buse 62 à orifice calibré pour la projection de liquide de lavage, disposée dans un logement 64 ménagé dans la paroi translucide 26.

Le gicleur 62 comporte de plus un canal rectiligne 66 dont une des extrémités est reliée à la buse 62 et dont l'autre des extrémités est prolongée par un embout 68 de raccordement à un circuit d'alimentation en liquide de lavage, de type connu. Sur les figures, on a représenté uniquement un conduit souple 70 de ce circuit d'alimentation emmanché sur l'embout 68.

Le canal 66 est venu de matière avec une paroi 72 du corps 24 de boîtier opposée à la paroi translucide 26 et s'étend dans le compartiment médian 42 du boîtier, de manière que le canal 66 et la buse 62 soient alignés dans le plan P.

La buse 62 est maintenue dans le logement 64 de la paroi translucide 26 par serrage entre le bord de ce logement et l'extrémité du canal 66 raccordée à la buse.

Les soudures effectuées au niveau des bords jointifs 24A,26A délimitant le compartiment médian 42 permettent de réaliser ce serrage.

La position de la paroi translucide 26, qui est sensiblement à angle droit par rapport à la vitre 14, permet d'orienter facilement l'orifice calibré de la buse 62 de manière que le jet J émis par cette buse soit convenablement orienté vers la surface externe au véhicule de la vitre 14, comme cela est représenté sur les figures 2 et 3.

En variante, les rangées de diodes électroluminescentes peuvent être remplacées par d'autres sources lumineuses, par exemple des ampoules de type classique.

Suivant encore une autre variante, le feu de signalisation 20 peut comporter un nombre quelconque de sources lumineuses, de préférence un nombre pair de sources lumineuses. Dans ce cas, le canal 66 a avantageusement pour plan de symétrie longitudinal le plan médian du feu de manière à s'étendre entre deux moitiés de ce feu comprenant chacune un nombre égal de sources lumineuses.

L'invention ne se limite pas au mode de réalisation décrit en références aux figures.

En particulier, le feu de signalisation 20 peut être agencé dans d'autres emplacements que celui représenté aux figures. Par exemple, il peut être agencé à proximité des bords latéraux ou du bord inférieur de la vitre 14. Le feu de signalisation 20 peut encore être agencé dans un logement débouchant à l'extérieur du véhicule situé dans une zone adjacente à la vitre et au pavillon du véhicule.

L'invention comporte de nombreux avantages.

En particulier, la buse de projection de liquide de lavage disposée dans un logement ménagé dans la paroi translucide du feu de signalisation, entre deux rangées de sources lumineuses, améliore l'esthétique de la zone du véhicule dans lequel sont placés le feu de signalisation et le dispositif de nettoyage de la vitre, par rapport aux agencements classiques.

De plus, l'intégration du gicleur dans la paroi transparente du feu de signalisation permet de réduire le nombre des opérations de montage de ce feu de signalisation et du dispositif de nettoyage de la vitre.

## Revendications

1. Feu de signalisation pour véhicule automobile comprenant une vitre (14) et un dispositif de lavage de cette vitre muni d'un gicleur (60) alimenté en liquide de lavage, le feu de signalisation comprenant une paroi translucide (26) et étant destiné à être agencé à proximité de la vitre (14), caractérisé en ce que le gicleur (60) comporte une buse (62) de projection de liquide de lavage disposée dans un logement (64) ménagé dans la paroi translucide (26).

2. Feu de signalisation selon la revendication 1, caractérisé en ce qu'il comporte un boîtier (22) délimité en partie par la paroi translucide (26), et en ce que la buse (62) est reliée à un circuit de liquide de lavage par un canal de raccordement (66) venu de matière avec une paroi (72) du boîtier (22) opposée à la paroi translucide (26).

3. Feu de signalisation selon la revendication 2, caractérisé en ce que le boîtier (22) comporte un corps (24) assemblé avec la paroi translucide (26), le canal (66) étant solidaire de ce corps (24) et la buse (62) étant maintenue dans le logement (64) de la paroi translucide (26) par serrage entre le bord de ce logement et une extrémité du canal (66) raccordée à la buse (62).

4. Feu de signalisation selon la revendication 3, caractérisé en ce que le canal (66) a pour plan de symétrie longitudinal un plan médian (P) du feu de manière à s'étendre entre deux moitiés de ce feu comportant chacune un nombre égal de sources lumineuses (52).

5. Feu de signalisation selon les revendications 3 et 4 prises ensemble, caractérisé en ce que le corps (24) et la paroi translucide (26) du boîtier (22) comprennent des bords jointifs (24A,26A) soudés entre eux délimitant un compartiment médian (42) du boîtier dans lequel s'étend le canal (66), et deux compartiments latéraux (44,46) dans lequel sont disposées les sources lumineuses (52).

6. Feu de signalisation selon la revendication 4 ou 5, caractérisé en ce qu'une rangée (R1,R2) de diodes électroluminescentes (52) est disposée dans chacune desdites moitiés du feu, ces rangées (R1,R2) étant disposées symétriquement par rapport au plan médian (P) séparant lesdites moitiés du feu.

7. Feu de signalisation selon la revendication 6, caractérisé en ce que les diodes électroluminescentes (52) de chaque rangée (R1,R2) sont espacées entre elles suivant un pas constant, l'espacement entre les deux diodes électroluminescentes les plus rapprochées de ces deux rangées étant sensiblement égal au double du pas des rangées.

8. Feu de signalisation selon l'une quelconque des revendications 1 à 7, caractérisé en ce que la paroi translucide (26) est sensiblement perpendiculaire à la vitre (14) vers laquelle est orienté le gicleur (60).

## Claims

1. A warning light for a motor vehicle comprising a glass pane (14) and a device for washing this glass pane, provided with a jet (60) supplied with washing liquid, the warning light comprising a translucent wall (26) and being intended to be arranged in the vicinity of the glass pane (14), characterized in that the jet (60) comprises a nozzle (62) for spraying the washing liquid, disposed in a recess (64) arranged in the translucent wall (26).

2. A warning light according to claim 1, characterized in that it comprises a casing (22) partly delimited by the translucent wall (26), and in that the nozzle (62) is connected to a circuit of washing liquid through a connecting duct (66) obtained integrally with a wall (72) of the casing (22) on the opposite side to the translucent wall (26).

3. A warning light according to claim 2, characterized in that the casing (22) comprises a body (24) assembled with the translucent wall (26), the duct (66) being integral with this body (24) and the nozzle (62) being held in position in the recess (64) of the translucent wall (26) by a tight fit between the edge of this recess and one end of the duct (66) connected to the nozzle (62).

4. A warning light according to claim 3, characterized in that the duct (66) has a median plane (P) of the light as its plane of longitudinal symmetry, so as to extend between the two halves of this light, each comprising an equal number of light sources (52).

5. A warning light according to claims 3 and 4 taken together, characterized in that the body (24) and the translucent wall (26) of the casing (22) comprise contiguous edges (24A, 26A) welded together, delimiting a median compartment (42) of the casing wherein there extends the duct (66), and two side compartments (44, 46) wherein the light sources (52) are disposed.

6. A warning light according to claim 4, characterized in that one row (R1, R2) of electroluminescent diodes (52) is disposed in each of the said halves of the light, these rows (R1, R2) being disposed symmetrically relative to the median plane (P) separating the said halves of the light.

7. A warning light according to claim 6, characterized in that the electroluminescent diodes (52) of each row (R1, R2) are interspaced from each other along a constant pitch, the spacing between the two electroluminescent diodes of these two rows which are closest being substantially equal to twice the pitch of the rows.

8. A warning light according to any one of claims 1 to 7, characterized in that the translucent wall (26) is substantially perpendicular to the glass pane (14) towards which the jet (60) is orientated.

## Patentansprüche

1. Warnleuchte für Kraftfahrzeuge, bestehend aus einer Heckscheibe (14) und einer mit einem Waschflüssigkeits-Spritzverteiler (60) ausgerüsteten Waschvorrichtung für diese Heckscheibe, wobei die Warnleuchte eine durchsichtige Vorderwand (26) aufweist und dazu vorgesehen ist, nah an der Heckscheibe (14) angebracht zu werden, dadurch gekennzeichnet, daß der Spritzverteiler (60) eine Waschflüssigkeits-Sprühdüse (62) umfaßt, die in einer in der durchsichtigen Vorderwand (26) eingebrachten Halterung (64) angeordnet ist.

2. Warnleuchte nach Anspruch 1,
dadurch gekennzeichnet, daß sie ein teilweise durch die durchsichtige Vorderwand (26) abgegrenztes Gehäuse (22) umfaßt, und dadurch, daß die Düse (62) mit einer Waschflüssigkeits-Umlaufleitung über einen Anschlußkanal (66) verbunden ist, der mit einer der durchsichtigen Vorderwand (26) gegenüberliegenden Wand (72) des Gehäuses (22) materialschlüssig ist.

3. Warnleuchte nach Anspruch 2,
dadurch gekennzeichnet, daß das Gehäuse (22) einen mit der durchsichtigen Vorderwand (26) zusammengefügten Gehäusekörper (24) aufweist, wobei der Kanal (66) mit diesem Körper (24) formschlüssig verbunden ist und die Düse (62) in der Halterung (64) der durchsichtigen Vorderwand (26) dadurch festgehalten wird, daß sie zwischen dem Rand dieser Halterung und einem mit der Düse (62) verbundenen Ende des Kanals (66) eingeklemmt wird.

4. Warnleuchte nach Anspruch 3,
dadurch gekennzeichnet, daß die Symmetrielängsebene des Kanals (66) auf einer Mittellinie (P) der Warnleuchte liegt, so daß dar Kanal zwischen zwei Hälften dieser Warnleuchte verläuft, welche jeweils die gleiche Anzahl Lichtquellen (52) enthalten.

5. Warnleuchte nach den Ansprüchen 3 und 4,
dadurch gekennzeichnet, daß der Gehäusekörper (24) und die durchsichtige Vorderwand (26) des Gehäuses (22) aneinanderstoßende und miteinander verschweißte Seiten (24A, 26A) aufweisen, die einen Mittelraum (42) des Gehäuses abgrenzen, in dem der Kanal (66) verläuft, sowie zwei Seitenkammern (44, 46), in denen die Lichtquellen (52) angeordnet sind.

6. Warnleuchte nach Anspruch 4 oder 5,
dadurch gekennzeichnet, daß eine Reihe (R1,R2) Leuchtdioden (52) in jeder der genannten beiden Hälften der Warnleuchte untergebracht ist, wobei diese Reihen (R1,R2) symmetrisch zu der die beiden Hälften der Warnleuchte trennenden Mittellinie (P) angeordnet sind.

7. Warnleuchte nach Anspruch 6,
dadurch gekennzeichnet, daß die Leuchtdioden (52) einer jeden Reihe (R1,R2) voneinander in gleichmäßigem Abstand entfernt sind, wobei der Abstand zwischen den inneren beiden Leuchtdioden der einen und der anderen Reihe weitgehend das Doppelte des Diodenabstands der Reihen darstellt.

8. Warnleuchte nach einem der Ansprüche 1 bis 7,
dadurch gekennzeichnet, daß die durchsichtige Vorderwand (26) weitgehend senkrecht zur Heckscheibe (14) steht, auf die der Spritzverteiler (60) ausgerichtet ist.
